# EUROPÄISCHE PATENTSCHRIFT

(11) **EP 0 286 582 B1**
(45) Veröffentlichungstag und Bekanntmachung des Hinweises auf die Patenterteilung: **14.07.1993**
(21) Anmeldenummer: 88730082.0
(22) Anmeldetag: 08.04.1988
(51) Int. Cl.: C02F 3/32

(54) **Anlage zur biologischen Reinigung von Abwasser**
Installation for biological waste water purification
Installation pour la purification biologique d'eau usée

(30) Priorität: 10.04.1987 DE 3712419
(43) Veröffentlichungstag der Anmeldung: 12.10.1988
(73) Patentinhaber: Kraft, Harald, Dipl.-Ing., D-10779 Berlin (DE)
(72) Erfinder: Kraft, Harald, Dipl.-Ing., D-10779 Berlin (DE)
(74) Vertreter: Meissner, Peter E., Dipl.-Ing.

(56) Entgegenhaltungen:
- DE-A- 3 423 226

## Beschreibung

Die Erfindung betrifft eine Anlage zur biologischen Reinigung von Abwasser gemäß dem Oberbegriff des Patentanspruchs 1.

Eine derartige Anlage ist aus dem DE-Patent 34 23 226 bekannt.

Der vorliegenden Erfindung liegt die Aufgabe zugrunde, diese bekannte Anlage weiterzuentwickeln, um damit einerseits den Winterbetrieb und andererseits den Reinigungsgrad des Abwassers zu verbessern.

Gelöst wird diese Aufgabe mit den Merkmalen im Kennzeichen des Patentanspruchs 1.

Vorzugweise Ausgestaltungen ergeben sich aus dem Nebenanspruch 2 sowie den Unteransprüchen.

Die erfindungsgemäße Anlage soll nachfolgend anhand der Zeichnung erläutert werden. Dabei zeigt:

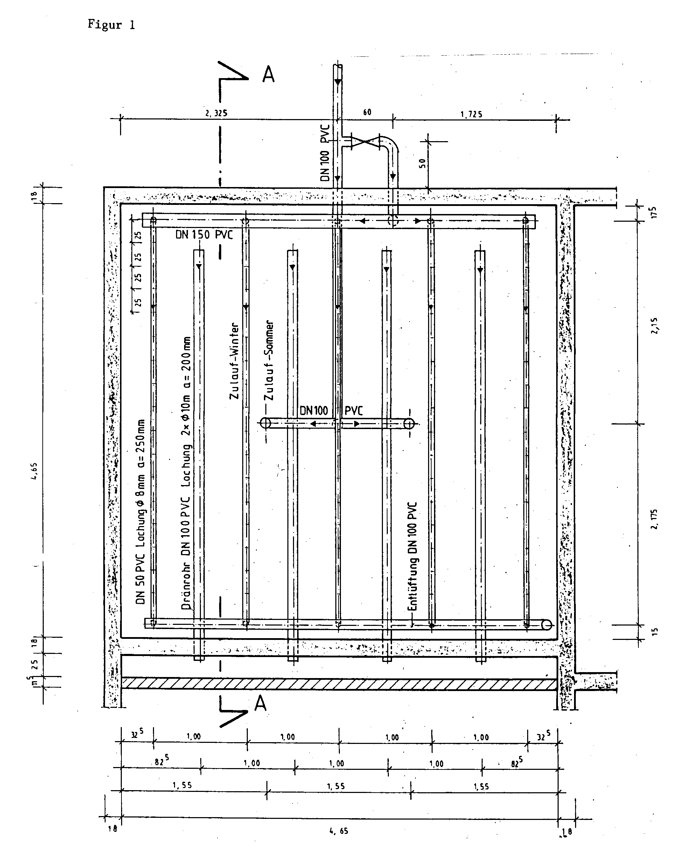

- Figur 1: eine schematische Draufsicht auf einen vertikal durchströmten Filter

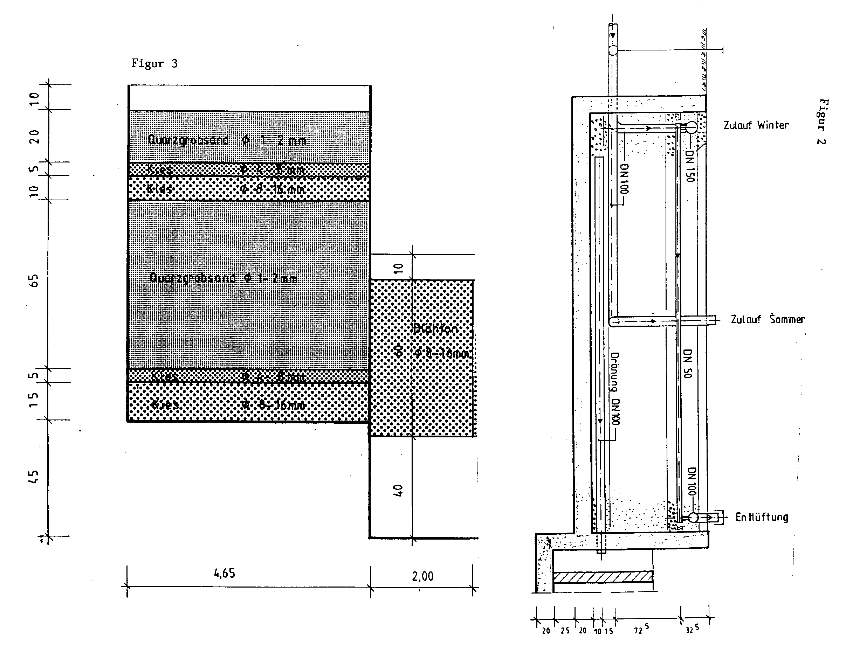

- Figur 2: den Längsschnitt durch einen vertikal durchströmten Filter
- Figur 3: den Filteraufbau eines vertikal durchströmten Filters

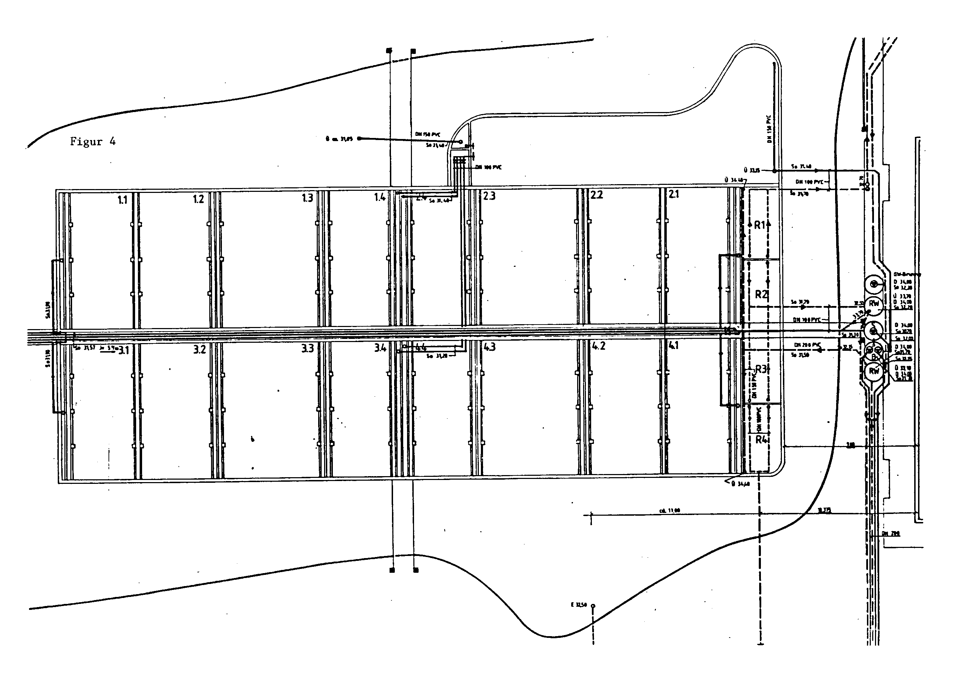

- Figur 4: eine schematische Draufsicht auf horizontal durchströmte Filter

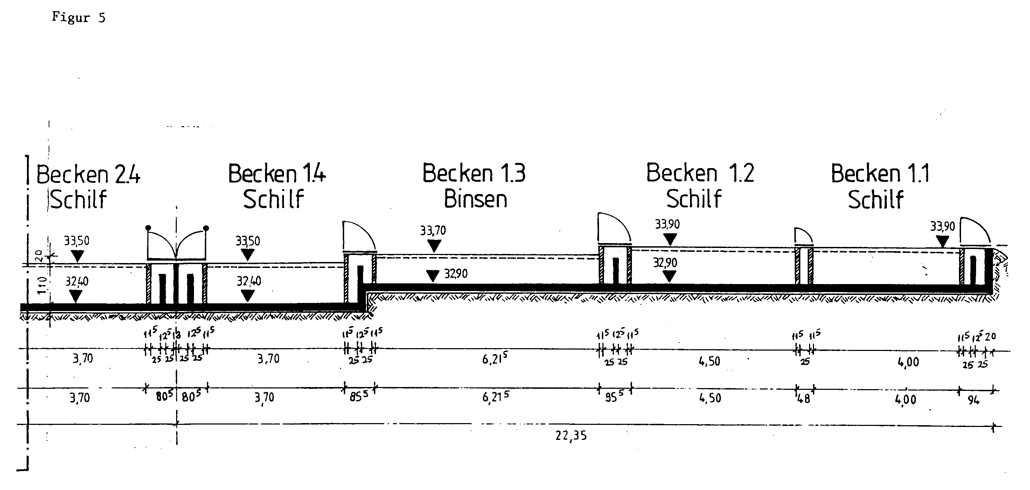

- Figur 5: den Längsschnitt durch einen horizontal durchströmten Filter

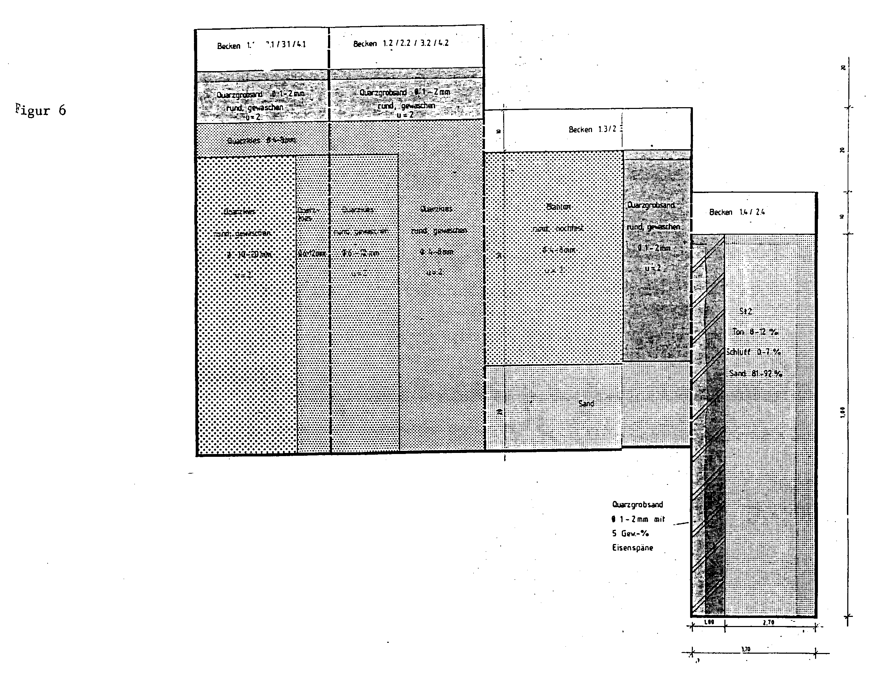

- Figur 6: den Filteraufbau von horizontal durchströmten Becken

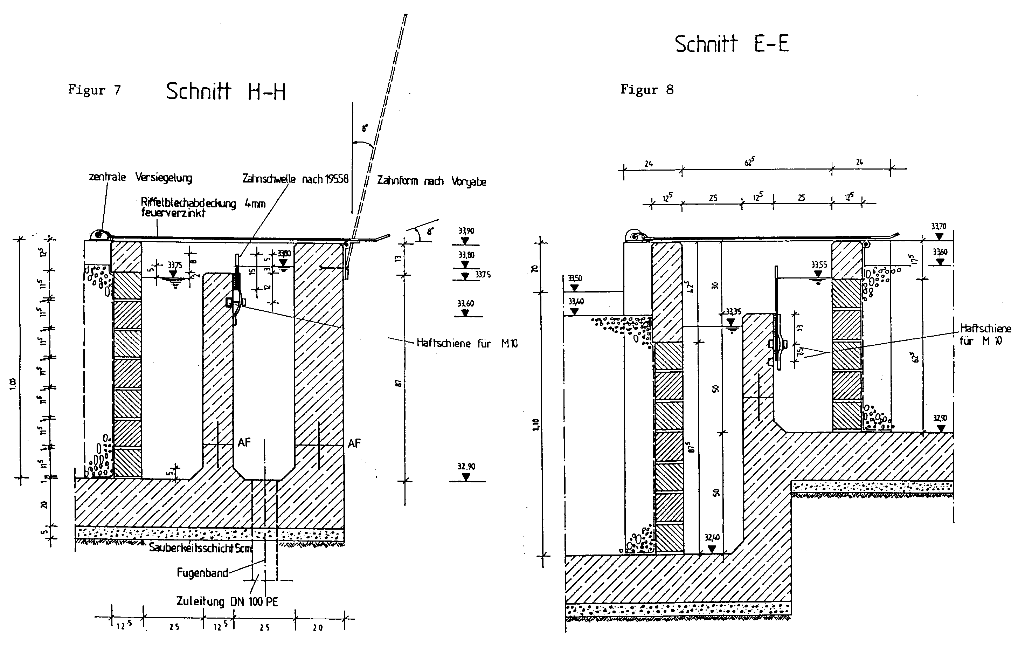

- Figur 7: den Querschnitt eines Einlaufbauwerkes mit Zahnschwellen
- Figur 8: den Querschnitt eines Verteilerbauwerkes zwischen den Filterstufen mit Zahnschwellen

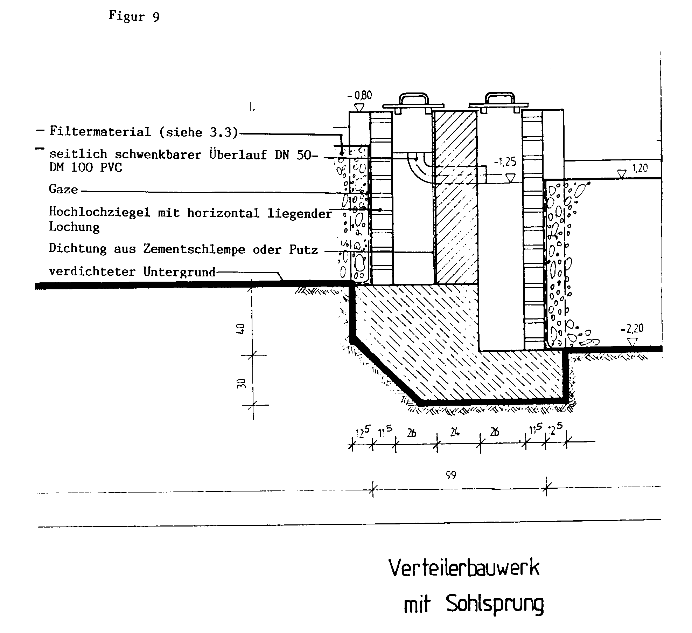

- Figur 9: den Querschnitt eines Verteilerbauwerkes zwischen den Filterstufen mit verstellbaren Rohrdurchlässen
Die Anlage besteht aus einer mechanischen Absetzstufe, einer Filterstufe, der Eliminationsstufe, der Adsorptionsstufe und einem Schönungsteich. Die Anlagenteile werden nachfolgend an Ausführungsbeispielen beschrieben.

### Mechanische Stufe:

Zur Entfernung der absetzbaren Stoffe ist ein Emscherbrunnen mit zwei Absetzringen von je 4,2 m³ Absetzraum vorgesehen und darunter angeordnet 28,9 m³ Faulraum für zweihundert Einwohnergleichwerte. Der ausgefaulte Schlamm muß zweimal jährlich abgepumpt werden. Der Ablauf erfolgt in einem Verteilerschacht, wo das Abwasser über Staubleche auf die Pflanzenbecken verteilt wird.

### Vertikal durchströmte Filterstufe:

Die Filterstufe wird aus dem Verteilerschacht über eine Pumpe intermittierend mit Einzelgaben von max. 50 mm beschickt. Die Verteilung erfolgt in der frostfreien Periode durch zwei Standrohre in der Mitte des Beckens auf der Oberfläche des Filters. In der Frostperiode wird durch Schiebersteuerung und durch Verschluß der Öffnungen der Standrohre das 25 cm unter der Oberfläche angeordnete Rohrnetz beschickt. Die Rohre (DN 50 PE) verfügen über senkrecht nach unten verlegte Bohrungen, Ø 10 mm, im Abstand von 20 cm und einer Entlüftung über die Filteroberfläche. Der Ablauf erfolgt durch Dränrohre in die horizontal durchströmten Becken. Die im Abwasser enthaltenen Schwebstoffe werden an der Oberfläche zurückgehalten. Die Wurzelbildung des Schilfes und die Bewegung der Halme gewährleistet die Offenhaltung des Filters. Der Filter besteht aus einer 20 cm mächtigen Deckschicht aus Grobsand (Ø 1-2 mm) oder schwachlehmigem Sand. Darunter ist eine 5 cm Stützschicht aus Kies (Ø 4-8 mm) angeordnet, in der die Verteilerrohre verlegt werden. Die Verteilerrohre entwässern in eine Kiesschicht (Ø 8-16 mm), die eine Verteilung des Abwassers auf dem darunter befindlichen 65 cm mächtigen Grobsandfilter (Ø 1-2 mm) ermöglicht. Eine Stützschicht (Ø 4-8 mm) verhindert das Eindringen des Sandes in die Dränschicht aus Kies (Ø 8-16 mm), aus der das Filtrat durch Dränrohre abgeleitet wird. Der Dauerwasserstand wird in der Mitte der Filtertiefe konstant gehalten.

### Horizontal durchströmte Filterstufe:

Kann die Ausbildung einer vertikal durchströmten Filterstufe nicht erfolgen, so ist das mechanisch gereinigte Abwasser in eine horizontal durchströmte Filterstufe einzuleiten. Das Abwasser wird in einer Einlaufrinne über die gesamte Breite des Filters verteilt und über eine auf einer Trennwand beweglich befestigte Zahnschwelle oder schwenkbare Rohrdurchlässe gleichmäßig in einer vor dem Filter auf seiner gesamten Breite und Tiefe angeordneten Verteilerrinne eingeleitet. Von hier tritt das Abwasser durch eine mit horizontaler Lochung aus Hochlochklinker errichteter Trennwand, deren Lochung durch eine Gaze gegen das Eindringen des Filtermaterials geschützt ist, horizontal in den Filter ein. Die Rinnen sind durch eine Abdeckung gegen den Einfall von Licht und Schmutz geschützt. Der Filter erhält eine 30 cm mächtige Schicht zur Aufnahme der Pflanzen aus Grobsand Ø 1-2 mm und Kies Ø 4-8 mm als Stützschicht. Darunter ist eine Grobkiesschicht Ø 16-32 mm zur Aufnahme der im Abwasser verbliebenen absetzbaren Stoffe sowie der Schwebstoffe von 60 cm Mächtigkeit angeordnet. Diese Schicht ist 3 m lang und grenzt in Fließrichtung an eine Kiesschicht von Ø 8-16 mm. Das Filtrat tritt durch eine mit einer Gaze geschützte mit liegender Lochung errichtete Hochlochklinkerwand in eine abgedeckte Verteilerrinne aus.

### Eliminationsstufe - Schilf

In der anschließenden mit Schilf bepflanzten Eliminationsstufe wird der Filter von Kies Ø 8-16 mm auf Ø 4-8 mm reduziert. Der Austritt des Wassers erfolgt, wie zuvor beschrieben, in eine Sammelrinne, wo der Wasserstand durch eine um 15 cm absenkbare Zahnschwelle mindestens 5 cm unter der Filteroberfläche gehalten wird, dies gilt für alle horizontal durchströmten Becken. Bei zunehmender Verdichtung des Filters kann das Wasserspiegelgefälle durch Absenken der Zahnschwelle um 2 % erhöht werden.

### Eliminationsstufe - Binsen

Die Einleitung des Abwassers in das nachfolgende mit Binsen bepflanzte Becken erfolgt wie zuvor beschrieben. Die Mächtigkeit des Filters ist der Durchwurzelungstiefe angepaßt und beträgt 50 cm. Das Filtermaterial besteht aus Kies oder Blähton Ø 4-8 mm und Quarzgrobsand Ø 1-2 mm. Zum Frostschutz der Sohle ist darunter eine 20 cm mächtige Füllsandschicht angeordnet.

### Adsorptionsstufe - Schilf

Als letzte Stufe folgt ein horizontal durchströmtes mit Schilf bepflanztes Becken, dessen Filter aus einer 1,0 m mächtigen Quarzgrobsandschicht Ø 1-2 mm mit 5 Gew.-% Eisenspaneinmischung und aus einer Schicht tonigem oder lehmigem Sand besteht. Die eingemischten Eisenspäne sind Flockungsmittel zur Phosphorbindung. Durch die Austauschkapazität des tonigen oder lehmigen Sandes werden beim konventionellen Landbehandlungsverfahren Phosphor und Stickstoff gebunden. Eine Reduktion dieser Nährstoffe kann auch außerhalb der Vegetationsperiode erwartet werden.

### Schönungsteich:

Der Schönungsteich hat bei einer spezifischen Oberfläche von 0,5 m²/EGW eine Fläche von 100 m² und eine mittlere Tiefe von 1,0 m. Neben der Sauerstoffanreicherung, der Verminderung der Keimzahl und des Rest-BSB₅₅, ist vor allem im Sommer die Pufferwirkung des Teiches von Bedeutung. Durch die hohe Verdunstung der Sumpfpflanzen steigen am Tage die Leitfähigkeit und die Konzentration der Abwasserparameter im Ablauf der Pflanzenbecken an, die im Teich ausgeglichen werden.

### Bepflanzung

Geeignete Pflanzen sind aus dem Stand der Technik bekannt. Wichtig bei der Auswahl ist neben den physiologischen Eigenschaften die Ausbildung des Wurzelsystemes, die Dominanz und die Vermehrung der Pflanze. Es empfiehlt sich die Beckentiefe der Durchwurzelungstiefe anzupassen, da sonst unterschiedliche Reaktions- und Strömungszonen entstehen können. Binsen und Schilf vermehren sich an nährstoffreichen Standorten sehr rasch. Schilf verliert dabei an Festigkeit und wird anfällig gegenüber Schädlingsbefall, vor allem Blattläusen. Die Pflanzenbestände, besonders bei kleinen Anlagen, werden durch Windeinwirkung gefährdet. Der Standort muß daher windgeschützt sein und eine maximale Besonnung erlauben.

### Betrieb der Anlage / Schlammbehandlung

Die in der Kläranlage anfallenden Schlämme können, sofern sie stabilisiert sind, auf mit Schilf bepflanzten Trockenbeeten aufgebracht werden. Der Schlamm wird schnell entwässert und mineralisiert, ebenso wird die Qualität des Dränablaufes verbessert. Durch die Kompostierung des getrockneten Schlammes werden die Schilfrhizome inaktiv und die Verwendung zur Bodenverbesserung im Land- und Gartenbau möglich.

### Winterbetrieb

Die Verteilerrinnen der Pflanzenbecken erhalten eine wärmedämmende Abdeckung. Die horizontal durchströmten Pflanzenbecken bleiben bei ausreichender hydraulischer Belastung funktionsfähig, wie die Praxis in Bad Reichenhall und in den österreichischen Alpen belegt. Im Falle einer unzureichenden hydraulischen Belastung können die flacheren Binsenbecken mit einer isolierenden Strohschicht oder mit dem Schnittgut der Becken abgedeckt werden.

## Patentansprüche

1. Anlage zur biologischen Reinigung von Abwasser, bestehend aus hintereinander angeordneten Filterbecken, die mit ein starkes Wurzelsystem aufweisenden Pflanzen besetzt sind, sowie mit einem dem Filterbecken vorgeschalteten Beruhigungsbecken, wobei das Beruhigungsbecken als mechanische Absetzstufe ausgebildet ist, daß die sich daran anschließende erste Filterstufe aus mindestens einem mit lehmigem Sand, Sand und Kies gefüllten und mit Schilf bepflanzten auf seiner ganzen Breite und Länge vertikal von intermittierend zugeführtem Abwasser durchströmten Becken besteht, daß der ersten Filterstufe eine zweite Filterstufe, die aus mit Sand und Kies gefüllten, mit Schilf bepflanzten auf ihrer gesamten Breite und Tiefe horizontal vom Abwasser durchströmten Becken besteht, daß der zweiten Filterstufe eine Eliminationsstufe nachgeschaltet ist, die aus mindestens einem mit Kies gefüllten, mit Binsen bepflanzten auf seiner ganzen Breite und Tiefe horizontal vom Abwasser durchströmten Becken besteht und daß dieser Eliminationsstufe eine Adsorptionsstufe folgt, die aus mindestens einem mit lehmigem Sand gefüllten und Schilf bepflanztem auf seiner ganzen Breite und Tiefe horizontal vom Wasser durchströmten Becken besteht,
**dadurch gekennzeichnet,**
daß das Abwasser dem vertikal durchströmten Becken in der frostfreien Periode auf der Oberfläche und bei Frost durch ein Rohrnetz 20 bis 30 cm unter der Oberfläche auf einer 10 cm dicken Kiesschicht verteilt zuführbar ist und
daß die horizontal durchströmten Becken jeweils eine Einlaufrinne aufweisen, die mit einer höhenverstellbaren Zahnschwelle versehen ist und daß sich daran eine Verteilerrinne anschließt, die vom übrigen Becken durch eine vertikale wasserdurchlässige Trennwand abgeteilt ist.

2. Anlage zur biologischen Reinigung von Abwasser, bestehend aus hintereinander angeordneten Filterbecken, die mit ein starkes Wurzelsystem aufweisenden Pflanzen besetzt sind, sowie mit einem dem Filterbecken vorgeschalteten Beruhigungsbecken, wobei das Beruhigungsbecken als mechanische Absetzstufe ausgebildet ist, daß die sich daran anschließende erste Filterstufe aus mindestens einem mit lehmigem Sand, Sand und Kies gefüllten und mit Schilf bepflanzten auf seiner ganzen Breite und Länge vertikal von intermittierend zugeführtem Abwasser durchströmten Becken besteht, daß der ersten Filterstufe eine zweite Filterstufe, die aus mit Sand und Kies gefüllten, mit Schilf bepflanzten auf ihrer gesamten Breite und Tiefe horizontal vom Abwasser durchströmten Becken besteht, daß der zweiten Filterstufe eine Eliminationsstufe nachgeschaltet ist, die aus mindestens einem mit Kies gefüllten, mit Binsen bepflanzten auf seiner ganzen Breite und Tiefe horizontal vom Abwasser durchströmten Becken besteht und daß dieser Eliminationsstufe eine Adsorptionsstufe folgt, die aus mindestens einem mit lehmigem Sand gefüllten und Schilf bepflanztem auf seiner ganzen Breite und Tiefe horizontal vom Wasser durchströmten Becken besteht,
**dadurch gekennzeichnet,**
daß das Abwasser dem vertikal durchströmten Becken in der frostfreien Periode auf der Oberfläche und bei Frost durch ein Rohrnetz 20 bis 30 cm unter der Oberfläche auf einer 10 cm dicken Kiesschicht verteilt zuführbar ist und
daß die horizontal durchströmten Becken jeweils eine Einlaufrinne aufweisen, die mit einer nachgeschalteten Verteilerrinne über schwenkbare Rohrdurchlässe verbunden ist und daß die Verteilerrinne vom übrigen Becken durch eine vertikale wasserdurchlässige Trennwand abgeteilt ist.

3. Anlage nach den Ansprüchen 1 bis 2,
**dadurch gekennzeichnet**,
daß der Eintritt und Austritt des Abwassers in bzw. aus dem horizontal durchströmten Becken über die ganze Breite und Tiefe des Beckens erfolgt.

4. Anlage nach den Ansprüchen 1 bis 3,
**dadurch gekennzeichnet,**
daß die eingesetzten Filtermaterialien eine steile Sieblinie mit einem Ungleichförmigkeitsgrad von d₆₀/d₁₀ = ca 2 aufweisen und somit einen hohen Grobporenanteil aufweisen.

## Claims

1. A plant for the biological purification of sewage, comprising filter tanks which are arranged in series and which are populated with plants which possess a strong root system, and comprising a stabilization tank which is arranged upstream of the filter tank, where the stabilization tank has the form of a mechanical settling stage, that the adjoining, first filter stage consists of at least one tank which is filled with loamy sand, sand and gravel, is planted with reeds, and along its entire breadth and length is vertically traversed by intermittently supplied sewage, that the first filter stage is followed by a second filter stage which consists of tanks which are filled with sand and gravel, are planted with reeds, and along their entire breadth and depth are horizontally traversed by the sewage, that the second filter stage is followed by an elimination stage which consists of at least one tank which is filled with gravel, is planted with rushes, and along its entire breadth and depth is horizontally traversed by the sewage, and that this elimination stage is followed by an adsorption stage which consists of at least one tank which is filled with loamy sand, is planted with reeds, and along its entire breadth and depth is horizontally traversed by the sewage, characterised in that the sewage can be supplied to the vertically traversed tank distributed over the surface in the frost-free period and distributed over a 10 cm thick gravel layer by means of a pipe system 20 to 30 cm below the surface in the case of frost, and that the horizontally traversed tanks each comprise an inlet channel which is provided with a vertically adjustable indented sill and that an adjoining distributor channel is provided which is separated from the remainder of the tank by a vertical, water-permeable partition wall.

2. A plant for the biological purification of sewage, comprising filter tanks which are arranged in series and which are populated with plants which possess a strong root system, and comprising a stabilization tank which is arranged upstream of the filter tank, where the stabilization tank has the form of a mechanical settling stage, that the adjoining first filter stage consists of at least one tank which is filled with loamy sand, sand and gravel, is planted with reeds, and along its entire breadth and length is vertically traversed by intermittently supplied sewage, that the first filter stage is followed by a second filter stage which consists of tanks which are filled with sand and gravel, are planted with reeds, and along their entire breadth and depth are horizontally traversed by the sewage, that the second filter stage is followed by an elimination stage which consists of at least one tank which is filled with gravel, is planted with rushes, and along its entire breadth and depth is horizontally traversed by the sewage, and that this elimination stage is followed by an adsorption stage which consists of at least one tank which is filled with loamy sand, is planted with reeds, and along its entire breadth and depth is horizontally traversed by the sewage, characterised in that the sewage can be supplied to the vertically traversed tank distributed over the surface during the frost-free period and distributed over a 10 cm thick gravel layer by means of a pipe system 20 to 30 cm below the surface in the case of frost, and that the horizontally traversed tanks each comprise an inlet channel which is connected to a following distributor channel via swivelling pipe culverts, and that the distributor channel is separated from the remainder of the tank by a vertical, water-permeable partition wall.

3. A plant as claimed in Claims 1 to 2, characterised in that the inflow and outflow of the sewage into and out of the horizontally traversed tank takes place along the entire breadth and depth of the tank.

4. A plant as claimed in Claims 1 to 3, characterised in that the inserted filter materials possess a steep grading curve with a degree of irregularity of d₆₀/d₁₀ = approx. 2 and thus possess a large coarse pore constituent.

## Revendications

1. Installation pour la purification biologique d'eaux usées, constituée de bassins de filtration agencés l'un derrière l'autre, qui sont garnis de plantes présentant un fort système de racines, ainsi que d'un bassin de stabilisation disposé en amont des bassins de filtration, le bassin de stabilisation étant réalisé en tant qu'étage de décantation mécanique, le premier étage de filtration s'y raccordant étant constitué d'au moins un bassin rempli de sable argileux, de sable et de gravier, planté de roseaux, et traversé verticalement, sur toute sa longueur et toute sa largeur, d'eaux usées amenées de façon intermittente, un second étage de filtration, qui est constitué de bassins remplis de sable et de gravier, plantés de roseaux, et traversés horizontalement, sur toute leur profondeur et toute leur largeur, par les eaux usées, étant agencé en aval du premier étage de filtration, un étage d'élimination, qui est constitué d'au moins un bassin rempli de gravier, planté de joncs, et traversé horizontalement, sur toute sa profondeur et toute sa largeur, par les eaux usées, étant prévu en aval du second étage de filtration, et un étage d'adsorption, qui est constitué d'au moins un bassin rempli de sable argileux, planté de roseaux, et traversé horizontalement, sur toute sa profondeur et toute sa largeur, par l'eau, suivant cet étage d'élimination,
caractérisée en ce que les eaux usées peuvent être amenées de façon répartie au bassin traversé verticalement, dans la période sans gel, sur la surface et, en cas de gel, par un réseau de tubes de 20 à 30 cm sous la surface, sur une couche de gravier de 10 cm d'épaisseur, et en ce que les bassins traversés horizontalement présentent, chacun, un canal d'entrée qui est muni d'un seuil denté réglable en hauteur, et en ce qu'un canal de répartition s'y raccorde, qui est séparé du bassin restant par une paroi de séparation verticale perméable à l'eau.

2. Installation pour la purification biologique d'eaux usées, constituée de bassins de filtration agencés l'un derrière l'autre, qui sont garnis de plantes présentant un fort système de racines, ainsi que d'un bassin de stabilisation disposé en amont des bassins de filtration, le bassin de stabilisation étant réalisé en tant qu'étage de décantation mécanique, le premier étage de filtration s'y raccordant étant constitué d'au moins un bassin rempli de sable argileux, de sable et de gravier, planté de roseaux, et traversé verticalement, sur toute sa longueur et toute sa largeur, d'eaux usées amenées de façon intermittente, un second étage de filtration, qui est constitué de bassins remplis de sable et de gravier, plantés de roseaux, et traversés horizontalement, sur toute leur profondeur et toute leur largeur, par les eaux usées, étant agencé en aval du premier étage de filtration, un étage d'élimination, qui est constitué d'au moins un bassin rempli de gravier, planté de joncs, et traversé horizontalement, sur toute sa profondeur et toute sa largeur, par les eaux usées, étant prévu en aval du second étage de filtration, et un étage d'adsorption, qui est constitué d'au moins un bassin rempli de sable argileux, planté de roseaux, et traversé horizontalement, sur toute sa profondeur et toute sa largeur, par l'eau, suivant cet étage d'élimination,
caractérisée en ce que les eaux usées peuvent être amenées de façon répartie au bassin traversé verticalement, dans la période sans gel, sur la surface et, en cas de gel, par un réseau de tubes de 20 à 30 cm sous la surface, sur une couche de gravier de 10 cm d'épaisseur, et en ce que les bassins traversés horizontalement présentent, chacun, un canal d'entrée qui est relié à un canal de répartition prévu en aval par l'intermédiaire de passages tubulaires pouvant pivoter, et en ce que le canal de répartition est séparé du bassin restant par une paroi de séparation verticale perméable à l'eau.

3. Installation selon les revendications 1 et 2,
caractérisée en ce que l'entrée et la sortie des eaux usées ont lieu dans le bassin traversé horizontalement, ou hors de celui-ci, sur toute la profondeur et toute la largeur du bassin.

4. Installation selon les revendications 1 à 3,
caractérisée en ce que les matières de filtration utilisées présentent une courbe de tamisage à forte pente avec un degré de régularité de d₆₀/d₁₀ sensiblement égal à 2, et présentent, ainsi, une proportion élevée de macropores.
